(19) Europäisches Patentamt

European Patent Office

Office européen des brevets

(11) **EP 1 263 180 A1**

(12) **EUROPEAN PATENT APPLICATION**

(43) Date of publication:
**04.12.2002 Bulletin 2002/49**

(51) Int Cl.$^7$: **H04L 25/03**

(21) Application number: **02010714.0**

(22) Date of filing: **14.05.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Giacomo, Cannalire**<br>**20062 Cassano D'Adda (IT)**<br>• **Di Donna, Giambattista**<br>**20064 Gorgonzola (IT)** |
| (30) Priority: **30.05.2001 IT MI20011142** | (74) Representative: **Giustini, Delio** |
| (71) Applicant: **Siemens Information and Communication Networks S.p.A.**<br>**20126 Milano (IT)** | **Siemens Information and Communication Networks S.p.A.,**<br>**Palazzo Gorky**<br>**Via Monfalcone, 1**<br>**20092 Cinisello Balsamo (IT)** |

(54) **Decision feedback equalizer whereby feedforward filter includes post-cursor and pre-cursor taps**

(57) A decision-feedback equalizer, including a transversal filter (10) fed with a signal containing symbols to submit to detection. The equalizer includes also a feedback filter (12) fed with the sequence of symbols already submitted to detection as well as a detection element (16) performing the detection action starting from the signal processed by the transversal filter (10) and by its sequence of symbols already submitted to feedback adapted by the feedback filter (12). The transversal filter (10) includes both pre-cursor taps and post-cursor taps. Preferably, post-cursor taps are at least two or three, thus being in number higher than or equal to the pre-cursor taps and to the feedback filter taps (12). In view of the reduced number of necessary taps, the equalizer can be easily implemented through a DSP.

Fig. 2

EP 1 263 180 A1

**Description**

Field of the Invention

The present invention relates to equalizer devices and concerns in particular equalizers with feedback of decisions of the type currently called decision-feedback equalizer (or, briefly, DFE).

Background art

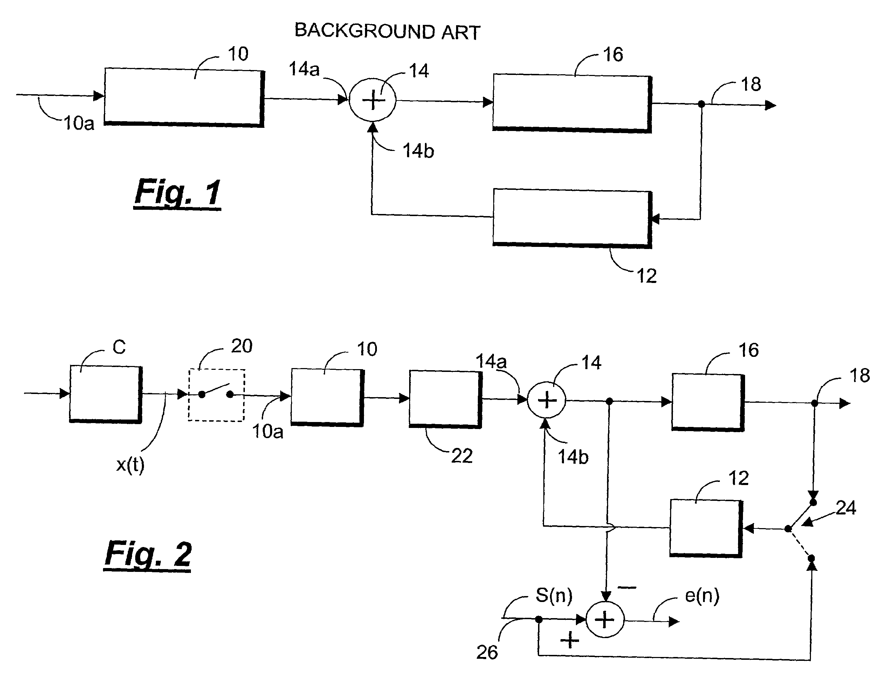

According to the classical structure (taken as pattern for the preamble of claim 1 and schematically recalled in figure 1 of the attached drawings), an equalizer of this type essentially includes two filters 10 and 12 acting as feed forward filter and feedback filter, respectively.

The signal destined to be equalized and submitted to detection is received on an input line indicated with 10a. After processing in filter 10, the subject signal is applied to a first input 14a of a sum node 14. The signal produced in the sum node 14 is brought to the input of a device 16 performing a symbol-by-symbol detection function and produces at its output the sequence of detected symbols, on a line indicated with 18. This last sequence is newly sent towards the feedback filter 12 whose output is sent to the other input of the sum node 14 indicated with 14b.

In general, both the filters 10 and 12 are equipped with taps spaced by a time slot equal to the symbol interval. The filter 10 is essentially a linear transverse equalizer susceptible to assume the shape of an adapted whitened filter - in the case of a DFE equalizer of the 0 forcing (zero-forcing) type in which both the filters 10 and 12 are of the impulse infinite response (IIR) type -.

Actually, the operation of the equalizer grounds on the fact that the feedback filter 12 (having as input the sequence of decisions on the symbols previously detected) is used to eliminate the inter-symbolic interference portion caused by the symbols previously detected from the current estimate. The optimization of the two filters, each one having a finite number of coefficients, is generally made according to the criterion based on the minimization of the mean square error (MSE).

All that indicated above, and in particular the criteria enabling to determine all the coefficients of filters 10 and 12 using the minimization of the mean square error, corresponds to criteria already well known in the technique.

In particular, for a general processing in the decision-feedback equalization technique, useful reference can be made to John G. Proakis volume - "Digital communications" McGraw Hill, 4th edition, and in particular to section 10.3 on page 638 and subs.

Concerning the calculation of the coefficients of filters 10 and 12 carried out with equations in the matricial form (Wiener-Hopf equations, through determination of the relevant Hermitiana equivalent autocorrelation matrix that can be expressed through Cholesky factorization) reference can be made, in addition to the already mentioned Proakis volume, to other reference papers such as:

- M. Bellanger, "Digital Processing of Signals", Jon Wiley & Sons,
- Fuzhen Zhang, "Matrix Theory", Springer Verlag, and
- S. Benedetto, E. Biglieri, V. Castellani, "Theory of digital transmission", Jackson Libri.

Whichever are the specific implementation details adopted, all the "classical" dealings of the decision-feedback equalizer, and in particular those previously considered, foresee the resort to a structure based on the utilization of the sole so-called pre-cursors of the signal for the implementation of the transversal filter 10,.

In other words, having recourse to the expression (10.3-1) given on page 638 of the already mentioned Proakis book, the (estimated) signal $\hat{I}_k$ relevant to the k-th symbol present at the output of the sum node 14 of figure 1 can be generally expressed according to a relation of the following type:

$$\hat{I}_k = \sum_{j=K_1}^{0} c_j v_{k-j} + \sum_{j=1}^{K_2} c_j \widetilde{I}_{k-j}$$

were $v_{k-j}$ indicates the sequence of signals at the input of filter 10 and $\widetilde{I}_{k-j}$ are the symbols previously detected while $c_j$ are the weighting coefficients associated to the different filter taps, that is $K_1$+1 taps in the transversal filter 10 and $K_2$ taps in the feedback filter 12.

It could be appreciated that the equalizer is intrinsically non-linear, due to the fact that the feedback filter 12 acts on the basis of the symbols previously detected so to keep into account the previous signal "history".

Object and summary of the Invention

Scope of the present invention is to implement an equalizer of the type specified above, additionally perfected concerning its performances, mainly in relation to the possible application for the identification and equalization of the transmission channel in the frame of the connections affected by selective fading in frequency.

According to the present invention, this scope is reached thanks to an equalizer device having the characteristics specifically described in the following claims.

In practice, the solution according to the invention foresees to employ, in the frame of a structure of decision-feedback equalizer of the type previously described, a structure in which the signal post-cursors are considered in addition to the pre-cursors in the feed forward filter (indicated with 10 in the description already made with reference to figure 1).

Preferably, the feed forward filter is implemented as a transversal filter with M1 pre-cursors and M2 post-cursors preferably implemented with sampling frequency equal to twice the symbol frequency.

The experiences conducted by the Applicant have demonstrated that - surprisingly - the fact to use also the post-cursors in the implementation of the feed forward filter enables to obtain unexpected improvements in terms of ratio at the signal/mean square error (S/MSE).

All the above, through implementation of a structure that proves to be largely insensible to possible errors (jitter) in the development of the detected signal sampling operation and with the additional possibility to obtain an important performance improvement keeping the total number of taps unchanged (that is, reducing the number of pre-cursors and/or taps in the feedback filter by a value corresponding to the number of post-cursors inserted in the feed forward filter) or even reducing the total number of the taps (that is, reducing the number of pre-cursors and/or taps in the feedback filter by an amount higher than the number of post-cursors inserted in the feed forward filter).

This aspect results particularly important since it allows restricting, and in some cases also reducing, the computational burden tied to the realization of the different taps, with the consequent possibility to implement the equalizer as a whole through a DSP.

Though not tying to any specific theory on the matter, the Applicant has ground to think that the surprising performance improvement that can be obtained with the invention is tied to the fact that the adoption of a structure considering also the post cursors for the realization of the feed forward filter is such to give the equalizer the characteristics of a non-minimum phase system, thus improving the effectiveness of the compensation action of noise phenomena of the transmission channel that can be configured they too as non-minimum phase phenomena.

Brief description of figures

The invention shall be now described, as an example but not limited to the same, with reference to the attached drawings, in which:

- Figure **1**, relevant to the general structure of a digital-feedback equalizer, has already been described above,
- Figure **2** shows the block diagram of the structure of an equalizer according to the invention, and
- Figure **3** shows the block diagram of the structure of one of the elements included in the equalizer of figure 2.

Description of a preferred embodiment of the Invention

In particular, in the diagram of figure 2 elements identical or equivalent from the structural point of view to those previously described have been marked with the same reference numbers already appearing in figure 1.

In the frame of the decision-feedback equalizer shown in figure 2 and globally indicated with 1 appear basic elements equivalent to those previously described from the structural point of view, that is:

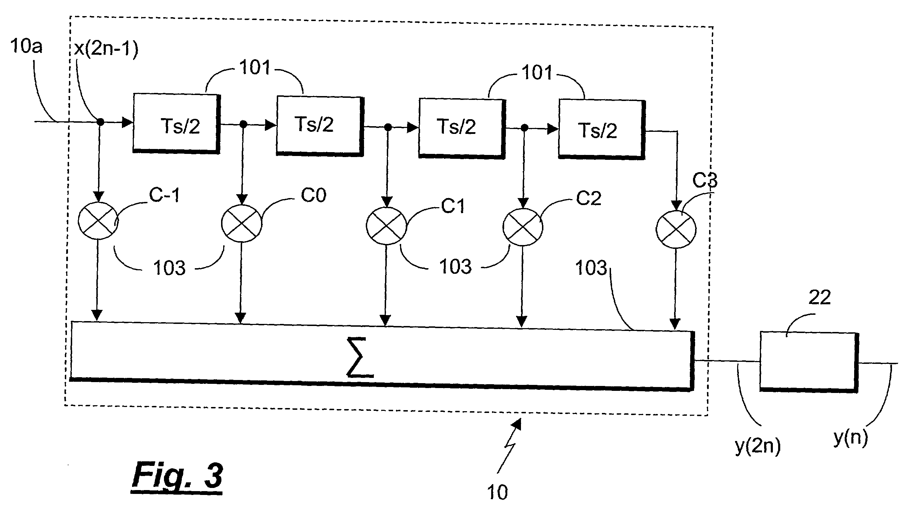

- a feed forward transversal filter 10 (which, as better described below with reference to figure 3, foresees - in the case of the invention - also the use of the signal post-cursors),
- a detector (decision element) operating symbol by symbol 16, and
- a feedback filter or feedback 12.

The transmission channel marked with C in figure 2 supplies at output the signal x(t) on which the equalization operation and detection of symbols transmitted has to be carried out.

In the currently preferred embodiment of the invention, it is foreseen that the above-mentioned signal x(t) is submitted to sampling in a sampling device 20 (of the type known in itself) however operating with a sampling frequency equal to twice the symbol frequency.

Consequently, indicating with Ts the symbol interval, the sampled signal brought to the input of the feed forward filter 10 consists of a sequence of samples separated each other by a time interval equal to Ts/2.

The above with the possible presence of a temporal error in the development of the sampling action, the value of said error being generally represented by a time slot t0: in these conditions, t0=0 represents the absence of sampling error, while t0/Ts=0.25 represents the maximum value of said error.

In a symmetrical way, the numeric reference 22 indicates a down sampling unit performing the elimination of a sample over two, among those coming out from filter 10. The above in order to generate, starting from the flow of filtered samples at the output of filter 10, a flow of samples reduced to one half and therefore susceptible of being brought to the first input 14a of the sum node 14 with a number of values in the time unit equal to the homologue number of values simultaneously brought to the second input 14b starting from the output of the feedback filter 12.

In the diagram of figure 2 it was also shown a deviator element 24 that, initially brought to the position indicated with a dotted line during the starting estimate phase of the equalizer operation procedure, enables to initialise the set of the equalizer coefficients.

This result is obtained, for instance, performing (in the known way) the minimization of the mean square error (MSE) so to minimize the deviation e(n) between the estimated set (detected at the output of the sum node 14) and a target signal or preamble s(n) - let as known - brought to an additional input line 26 of the equalizer 1.

In this first phase, being known in reception the target signal s(n), the estimated set is simply obtained through the convolution process of the signal consisting of the samples received at Ts/2 (remember that the symbol interval is herein indicated with Ts) and of the preamble with the impulsive response of the adaptive filter.

After initialization of the filter coefficients, the switch 24 is set on the position shown with a continuous line in figure 2, causing that the sequence of estimated symbols supplied on the output line 18 of the equalizer 1 is sent back also towards the input of the feedback filter 12.

In these conditions, which correspond to the normal operation of equalizer 1, in reception it is known only the signal received and the equalizer output is obtained from the convolution process of the signal made of the samples received at Ts/2 and of the decisions y(n) with the impulse response of the adaptive filter.

All the above according to the relation

$$y(n) = \sum_{i=-M1}^{0} C_i \cdot x(2n-i) + \sum_{j=1}^{M2} Ci \cdot x(2n-i) - \sum_{i=1}^{L} Pi \cdot \widehat{y}(n-i)$$

In the preceding relation, the feedback filter 12 coefficients are indicated with Pi while in the same relation the transversal filter 10 coefficients have been indicated with Ci.

While the solutions according to the known technique foresee the use of transversal filters showing only precursors (therefore, filters in which, in the relation recalled above, M1≠0 and M2=0), the solution according to the invention foresees also the use of the post-cursors, therefore having in this case also M2≠0.

All the above according to the criteria better shown in the diagram of figure 3, which refers - for example purposes - to the possible implementation of filter 10 as a transversal filter including four delay elements 101 and five taps 102 controlled by a sum node 103. Therefore, the described configuration includes three post-cursors (weighted with coefficients C1, C2 and C3), a pre-cursor (weighted with the coefficient C-1) and the central tap concerning the current term x(2n) (weighed with the Co coefficient). It could be appreciated that, according to the current use, the component of the output signal y(2n) corresponding to the homologue sample of the input signal (X(2n)) has been actually considered as incorporated between the pre-cursors (see also the formula 10.3-1 of Proakis volume, wide reference to which has been made before).

The experiences made by the Applicant demonstrate that - surprisingly and unexpectedly - at equal linear taps, that is calculation complexity, the equalizer decision-feedback in which the filter 10 operates both on pre-cursors and on post-cursors shows better performances in terms of signal/mean square error (S/MSE) ratio compared to decision-feedback equalizers with pre-cursors only. All the above mainly in presence of C channels affected by selective fading in frequency and in independently from the best sampling phase.

These results are indicated in the following table.

| M1 M2 L | Bc=0dB fn=0Hz t0=0 | Bc=0dB fn=0Hz t0/Ts=0.25 | f_min Bc=30dB fn=5MHz t0=0 | f_min Bc=30dB fn= 5Mhz t0/Ts=0.25 | f_no_min Bc=30dB fn= 5Mhz t0=0 | f_no_min Bc=30dB fn=5MHz t0/Ts=0.25 |
|---|---|---|---|---|---|---|
| 5 5 0 | 63.0 dB | 24.6 dB | 11.8 dB | 11.6 dB | 12.1 dB | 12.2 dB |

(continued)

| M1 M2 L | Bc=0dB fn=0Hz t0=0 | Bc=0dB fn=0Hz t0/Ts=0.25 | f_min Bc=30dB fn=5MHz t0=0 | f_min Bc=30dB fn= 5Mhz t0/Ts=0.25 | f_no_min Bc=30dB fn= 5Mhz t0=0 | f_no_min Bc=30dB fn=5MHz t0/Ts=0.25 |
|---|---|---|---|---|---|---|
| 5 5 0 | 64.3 | 63.5 | 11.4 | 10.9 | 11.5 | 11.5 |
| 2 2 0 | 58.9 | 48.3 | 10.8 | 10.8 | 11.0 | 11.0 |
| 3 2 0 | 58.3 | 56.6 | 10.9 | 10.9 | 11.0 | 11.0 |
| 2 3 0 | 59.0 | 59.0 | 11.0 | 10.9 | 11.1 | 11.0 |
| 3 3 0 | 58.7 | 58.7 | 10.8 | 10.8 | 10.8 | 11.0 |
| 2 2 1 | 58.9 | 54.4 | 54.1 | 55.4 | 31.9 | 22.1 |
| 3 2 1 | 58.3 | 58.7 | 53.8 | 55.2 | 30.1 | 23.4 |
| 2 2 2 | 59.2 | 57.5 | 53.9 | 51.7 | 42.7 | 24.6 |
| 3 2 2 | 58.6 | 58.8 | 54.2 | 52.0 | 42.1 | 29.7 |
| 2 3 1 | 59.0 | 56.3 | 54.1 | 51.6 | 50.7 | 51.9 |
| 3 3 1 | 58.7 | 58.6 | 54.5 | 51.9 | 49.4 | 51.9 |
| 2 3 2 | 52.4 | 57.7 | 54.1 | 51.4 | 49.3 | 51.5 |
| 3 3 2 | 53.5 | 58.6 | 54.6 | 51.7 | 46.8 | 52.1 |
| 5 0 5 | 63.0 | 46.7 | 45.1 | 33.1 | 19.5 | 13.0 |
| 5 0 5 | 63.0 | 22.8 | 35.6 | 21.7 | 11.8 | 12.2 |

The table shows the results in terms of S/MSE ratio, obtained for sixteen different equalizer structures based on the use of the number of pre-cursors (M1), post-cursors (M2) and coefficients of the feedback filter (L) indicated in the column on the far left of the table.

The results obtained are ordered in six columns respectively referring to the following channel conditions:

- absence of selective fading in frequency (Bc=0 dB, fn=0Hz) and absence of sampling errors (t0=0),
- absence of selective fading in frequency and maximum sampling error (t0/Ts=0.25),
- presence of minimum phase fading (f_min), with 30 dB notch depth (Bc) and 5 MHz notch frequency (fn), and t0=0,
- presence of minimum phase fading as in the previous case, but with maximum sampling error t0/Ts=0.25,
- presence of non-minimum phase fading (f_no_min), with 30 dB notch depth and 5MHz notch frequency, and t0=0, and
- presence of non-minimum phase fading, as in the previous case, and of maximum sampling error t0/Ts=0.25.

Data indicated in the first and in the last line of the table refer to equalizers in which the transversal filter 10 has been designed with sampling frequency equal to the symbol frequency.

From the evaluation of the subject table it can be noticed that in lack of selective fading in frequency all the considered equalizers show - even with reading instant t0 different from the best one - a good performance, with a rather high S/MSE ratio.

In presence of minimum phase selective fading in frequency with notch depth and notch frequency in the terms previously recalled, the performance of linear equalizers reveals to be poor (S/MSE ratio 10-11 dB) even with reading instant t0 equal to the best one. In these conditions a substantial worsening of the performances of the traditional DFE equalizers can be noticed (see the last two lines of the table, concerning equalizers with ten taps evenly shared between the feed forward filter 10 and the feedback filter 12).

The results indicated in the columns on the far right demonstrate that degrading of the performances of linear and DFE equalizers according to the known technique, becomes more evident in presence of non-minimum phase fading, in particular when we have a reading instant different from the best one (column on the far right of the table with t0/Ts=0.25).

On the contrary, it can be noticed that also in these very critical conditions, the performances of the equalizers according to the invention remain however satisfactory even in presence of a reduced number of taps (for instance five taps with M1=2, M2=2 and L=1).

Observing the results indicated in the lines seven to fourteen of the attached table, it might also be noticed that the simple increase by one unit of the post-cursor number (with the change of M2 from value 2 to value 3) enables to obtain significant improvements of the equalizer performances.

In particular, while the increase of M2 from value 2 to value 3 involves some betterment of the S/MSE ratio in the range of 20-30 dB, the increase by one unit of M1 and/or L1 leads to globally limited variations of the performances.

In particular, in exceptionally critical conditions evidenced by the results in the far right columns of the table, the results obtained with the equalizer in which M1=2, M2=3 and L=1 (therefore with a total number of six taps) result neatly higher than the results that can be obtained also with a higher number of taps (for instance ten taps) when post-cursors are not present (M2=0, see the last two lines of the table).

Nor the above-mentioned best result turns out to be significantly improved or improvable by increasing the number of taps when this increase occurs with an increase of M1 or L.

The solution according to the invention can be perfectly used for the possible implementation of the equalizer through DSP and this just in consideration of the possibility to contain the computational load tied to the implementation of the equalizer within acceptable values.

It is evident that variants and modifications are possible for those skilled in the art without departing from the protections of the following claims.

**Claims**

1.  Decision-feedback equalizer including a feed forward filter (10) to which its is sent an input signal with symbols to submit to detection, a feedback filter (12) fed with the sequence of the symbols already submitted to detection and a detection element (16) susceptible to perform the detection action of said symbols starting from said input signal processed by said feed forward filter (10) and by the sequence of said symbols already submitted to detection processed by said feedback filter (12), **characterized in that** said feed forward filter (10) is a transversal filter including at least one post-cursor tap (M2).

2.  Equalizer according to claim 1, **characterized in that** it includes a sampling stage (20) in order to submit said input signal to sampling with a sampling time lower than the symbol time (Ts) of said input signal.

3.  Equalizer according to claim 2, **characterized in that** said sampling stage (20) operates with sampling time, equal to one half of said symbol time (Ts).

4.  Equalizer according to claim 2 or claim 3, **characterized in that** it includes, interposed between said feed forward filter (10) and said detection element (16), a down sampler stage (22) to generate, starting from the sample flow generated by said feed forward filter (10), a reduced flow of samples separated by a time equal to said symbol time (Ts).

5.  Equalizer according to claim 1, **characterized in that** in said feed forward filter (10), the number of post-cursor taps (M2) is equal at least to the number of pre-cursor taps (M1).

6.  Equalizer according to claim 5, **characterized in that** the number of said post-cursor taps (M2) is higher than the number of said pre-cursor taps (M1).

7.  Equalizer according to any claim 1, 5 or 6, **characterized in that** said feedback filter (12) includes a relevant number of taps (L) and in the fact that the number of said post-cursor taps (M2) is equal at least to said relevant number of taps (L).

8.  Equalizer according to claim 7, **characterized in that** the number of said post-cursor taps (M2) is higher than said relevant number of taps (L).

9.  Equalizer according to any claim 1 through 8, **characterized in that** said feed forward filter includes at least two post-cursor taps.

10. Equalizer according to claim 9, **characterized in that** said feed forward filter (10) includes at least three post-cursor taps.

**11.** Equalizer according to any of the previous claims, **characterized in that** the total number of the taps of said feed forward filter (10) and of said feedback filter (12) is lower than or equal to ten.

**12.** Equalizer according to any of the previous claims, **characterized in that** the total number of the taps of said feed forward filter (10) and of said feedback filter (12) is lower than or equal to seven.

**13.** Equalizer according to any of the previous claims, **characterized in that** the total number of the taps of said feed forward filter (10) and of said feedback filter (12) is lower than or equal to six.

**14.** Equalizer according to any of the previous claims, implemented as a DSP.

BACKGROUND ART

Fig. 1

Fig. 2

EP 1 263 180 A1

_**Fig. 3**_

EP 1 263 180 A1

**European Patent Office**

## EUROPEAN SEARCH REPORT

Application Number

EP 02 01 0714

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | US 5 513 216 A (LANGBERG EHUD ET AL) 30 April 1996 (1996-04-30) * column 7, line 22 - line 59 * * claim 1 * | 1-14 | H04L25/03 |
| X | US 5 561 687 A (TURNER MICHAEL D) 1 October 1996 (1996-10-01) * column 4, line 8 - line 25 * * column 7, line 31 - line 47 * * column 9, line 4 - line 43 * * claims 1,2 * | 1-14 | |
| | | | TECHNICAL FIELDS SEARCHED (Int.Cl.7) |
| | | | H04L |
| | The present search report has been drawn up for all claims | | |

| Place of search | Date of completion of the search | Examiner |
|---|---|---|
| MUNICH | 26 August 2002 | Schiffer, A |

## ANNEX TO THE EUROPEAN SEARCH REPORT
## ON EUROPEAN PATENT APPLICATION NO.

EP 02 01 0714

This annex lists the patent family members relating to the patent documents cited in the above–mentioned European search report.
The members are as contained in the European Patent Office EDP file on
The European Patent Office is in no way liable for these particulars which are merely given for the purpose of information.

26-08-2002

| Patent document cited in search report | | Publication date | Patent family member(s) | | Publication date |
|---|---|---|---|---|---|
| US 5513216 | A | 30-04-1996 | CA | 2158186 A1 | 14-04-1996 |
| | | | CN | 1130830 A ,B | 11-09-1996 |
| | | | EP | 0707400 A2 | 17-04-1996 |
| | | | IL | 115587 A | 13-09-2001 |
| | | | JP | 8213935 A | 20-08-1996 |
| US 5561687 | A | 01-10-1996 | US | 5414733 A | 09-05-1995 |